(19) Europäisches Patentamt / European Patent Office / Office européen des brevets

(11) **EP 3 977 411 B1**

(12) **FASCICULE DE BREVET EUROPEEN**

(45) Date de publication et mention
de la délivrance du brevet:
**20.11.2024 Bulletin 2024/47**

(21) Numéro de dépôt: **20740360.1**

(22) Date de dépôt: **22.05.2020**

(51) Classification Internationale des Brevets (IPC):
***G06T 7/73*** *(2017.01)*

(52) Classification Coopérative des Brevets (CPC):
**G06T 7/75;** G06T 2207/30244

(86) Numéro de dépôt international:
**PCT/FR2020/050858**

(87) Numéro de publication internationale:
**WO 2020/240124 (03.12.2020 Gazette 2020/49)**

(54) **DISPOSITIF DE TRAITEMENT DE PRISE DE VUE**

SCHUSSVERARBEITUNGSVORRICHTUNG

SHOT-PROCESSING DEVICE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **24.05.2019 FR 1905535**

(43) Date de publication de la demande:
**06.04.2022 Bulletin 2022/14**

(73) Titulaires:
• **INRIA - Institut National de Recherche en
Informatique et en Automatique
78150 Le Chesnay (FR)**
• **Université de Lorraine
54052 Nancy (FR)**

(72) Inventeurs:
• **BERGER, Marie-Odile
78150 Le Chesnay (FR)**
• **GAUDILLIERE, Vincent
78150 Le Chesnay (FR)**
• **SIMON, Gilles
78150 Le Chesnay (FR)**

(74) Mandataire: **Vidon Brevets & Stratégie
16B, rue de Jouanet
BP 90333
35703 Rennes Cedex 7 (FR)**

(56) Documents cités:
**US-B2- 9 002 062**

• **NICHOLSON LACHLAN ET AL: "QuadricSLAM:
Dual Quadrics From Object Detections as
Landmarks in Object-Oriented SLAM", IEEE
ROBOTICS AND AUTOMATION LETTERS, IEEE,
vol. 4, no. 1, 1 January 2019 (2019-01-01), pages
1 - 8, XP011703583, DOI:
10.1109/LRA.2018.2866205**
• **GAY PAUL ET AL: "Probabilistic Structure from
Motion with Objects (PSfMO)", 2017 IEEE
INTERNATIONAL CONFERENCE ON COMPUTER
VISION (ICCV), IEEE, 22 October 2017
(2017-10-22), pages 3094 - 3103, XP033283177,
DOI: 10.1109/ICCV.2017.334**
• **MEHDI HOSSEINZADEH ET AL: "Structure Aware
SLAM using Quadrics and Planes", ARXIV.ORG,
CORNELL UNIVERSITY LIBRARY, 201 OLIN
LIBRARY CORNELL UNIVERSITY ITHACA, NY
14853, 24 April 2018 (2018-04-24), XP081260266**

EP 3 977 411 B1

**Description**

La présente invention concerne le domaine de la localisation, et en particulier de la détermination au sein d'une scène connue d'une position et d'une orientation, formant un couple appelé pose.

Le positionnement visuel est un domaine complexe. Le positionnement permet de localiser un individu ou un véhicule mobile au sein d'une « carte » (2D ou 3D) de l'environnement dans lequel il évolue. Par exemple, le GPS permet de localiser un récepteur GPS dans un repère terrestre (latitude, longitude, altitude). Ce domaine diffère du domaine de l'odométrie.

L'odométrie (du grec hodos, voyage, et metron, mesure) permet d'estimer la position et l'orientation d'un véhicule en mouvement, relativement à sa position et son orientation d'origine. Typiquement, en mesurant les déplacements successifs des roues d'un véhicule, ou encore, en intégrant des données d'accélération fournies par une centrale inertielle. L'odométrie souffre généralement d'un problème de dérive.

Le positionnement visuel utilise la vision par ordinateur et analyse les images provenant d'une caméra ou d'un appareil photo pour en déduire la position et l'orientation de ce capteur au sein d'une carte prédéfinie de l'environnement. La carte peut se présenter sous différentes formes : il peut s'agir d'un nuage de points 3D, le calcul de pose reposant alors sur un appariement 3D-2D entre les points du nuage et des points détectés dans les images. Il peut aussi s'agir d'un marqueur (souvent appelé « tag ») de géométrie connue et facilement détectable dans les images, ou de plusieurs marqueurs dont les positions et orientations relatives sont connues. La détection des marqueurs permet de connaître la position dans l'image de points 3D associés aux marqueurs (par exemple, les coins des marqueurs) et la pose est, à nouveau, calculée à l'aide d'un appariement de points 3D-2D.

L'odométrie visuelle utilise des images acquises par une caméra pour compléter les données d'odométrie classique, ou les supplanter. Cette méthode permet d'obtenir les mouvements de la caméra entre images consécutives. Le plus souvent, un nuage de points 3D est reconstruit à la volée à partir de points 2D appariés entre images consécutives. Le calcul du mouvement et la reconstruction des points se font alors de manière simultanée. On utilise pour cela le terme SLAM visuel, pour l'expression anglaise « Simultaneous Localization And Mapping ».

Le positionnement visuel permet donc de positionner la caméra (ou l'appareil photo) par rapport à une carte prédéfinie. Si des objets virtuels ont été placés dans cette carte, le positionnement visuel permet de les visualiser par-dessus les images réelles, en respectant la perspective de ces images, ce qui permet d'obtenir un effet de réalité augmentée. Il permet aussi d'obtenir en temps réel des informations de localisation utiles à l'évitement d'obstacles ou l'aide à la navigation.

L'odométrie visuelle ne tient pas compte d'une carte prédéfinie. Une carte est éventuellement reconstruite à la volée, ce qui permet l'évitement d'obstacles, mais cette carte est initialement vierge de toute information extérieure utile, par exemple, à la réalité augmentée ou l'aide à la navigation. Des informations peuvent être ajoutées à la carte en cours de construction, mais le système n'est pas capable de prendre en compte des informations définies préalablement à l'utilisation de cette carte. En revanche, si la carte en cours de construction est appariée avec une carte prédéfinie (appariement 3D-3D), ou si la pose obtenue au début du processus est exprimée, d'une manière ou d'une autre, dans un référentiel prédéfini, des informations associées à ce référentiel peuvent être exploitées.

Le positionnement visuel repose typiquement sur un ensemble d'appariements 2D-3D entre des points détectés dans les images et un nuage de points 3D, préalablement reconstruit à l'aide d'une technique de SFM (pour « Structure From Motion »). En fonction du contexte, ces appariements sont réalisés grâce à (i) des descripteurs locaux associés à chaque point, (ii) des techniques d'apprentissage permettant directement d'inférer dans les images, via des réseaux convolutifs (CNN), la projection de points de contrôle identifiés préalablement sur des modèles 3D d'objets présents dans la scène (iii) la détection de marqueurs positionnés dans l'environnement.

Dans le premier cas (i), les points sont décrits par des vecteurs de dimension K (typiquement, K=128) appelés descripteurs (exemple le plus utilisé : le descripteur SIFT), connus pour les points du nuage 3D et calculés en temps réel pour les points détectés. Cette méthode a une portée limitée car, d'une part, les descripteurs de points ne sont pas robustes aux changements d'illumination et aux grands changements de points de vue et, d'autre part, ils tiennent compte de l'apparence locale des points, qui est faiblement discriminante en général. Ces problèmes font souvent échouer la méthode, notamment dans les grands environnements et/ou en présence de motifs répétés.

Dans le second cas (ii), la détection des points de contrôle est robuste aux grands changements de points de vue et d'illumination, à condition que ces variations soient représentées dans les images utilisées pour l'entraînement du CNN. L'inconvénient de cette méthode est qu'un grand nombre d'images associées à des positions et orientations de caméra connues doivent être utilisées pour entraîner le CNN, et ceci pour chaque objet considéré dans la scène. Cette méthode est donc difficilement adaptable à un nouvel environnement.

Dans le dernier cas (iii), la détection des marqueurs est robuste aux changements d'éclairage et de point de vue. De plus, chaque marqueur étant identifiable à l'aide d'indices visuels facilement reconnaissables, cette méthode n'est pas concernée par les problèmes de motifs répétés. L'inconvénient est qu'il faut positionner des marqueurs dans l'environnement, afin que l'un au moins d'entre eux soit toujours visible durant la phase d'utilisation du système, et que les positions et orientations relatives de ces marqueurs soient connues. Cette méthode est donc assez lourde à mettre en oeuvre, et la présence de marqueurs dans l'environnement n'est pas toujours souhaitable.

L'article intitulé "QuadricSLAM: Dual Quadrics From Object Détections as Landmarks in Object-Oriented SLAM" de NICHOLSON LACHLAN ET AL., IEEE ROBOTICS AND AUTOMATION LETTERS, IEEE, vol. 4, no. 1, 1 janvier 2019 (2019-01-01), pages 1-8, divulgue une méthode Simultaneous Localization and Mapping (SLAM) incluant des objet représenté par des quadriques reconstruites dans la carte 3D.

L'article intitulé "Probabilistic Structure from Motion with Objects (PSfMO)" de GAY PAUL ET AL., 2017 IEEE INTERNATIONAL CONFERENCE ON COMPUTER VISION (ICCV), IEEE, 22 octobre 2017 (2017-10-22), pages 3094-3103, divulgue une méthode de type Structure From Motion (SFM) avec des objets détectés et reconstruits à partir d'une base de données contenant des connaissances préalables sous forme de modèles CAO.

L'application US9002062B2 (ALLER JOSHUA VICTOR [US]) intitulé "Target and method of detecting, identifying, and determining 3-D pose of the target" divulgue une méthode d'estimation de pose à partir de tags multiples, contenant des ellipses à l'intérieur.

L'article intitulé "Structure Aware SLAM using Quadrics and Planes" de MEHDI HOSSEINZADEH ET AL., CORNELL UNIVERSITY LIBRARY, 201 OLIN LIBRARY CORNELL UNIVERSITY ITHACA, NY 14853, 24 avril 2018, divulgue une méthode de type Simultaneous Localization and Mapping (SLAM) qui inclut des plans et des quadriques dans la carte 3D, représentant des murs et des objets.

L'invention vient améliorer la situation. À cet effet, l'invention propose un dispositif de traitement de prise de vue, comprenant :

- une mémoire agencée pour recevoir d'une part des données de scène qui comprennent des doublets d'objet tridimensionnel associant chacun un identifiant d'objet, objet présent dans la scène, et des données d'ellipsoïde définissant un ellipsoïde ainsi que son orientation et une position de son centre dans un repère commun, et d'autre part des données de prise de vue définissant une image en deux dimensions de la scène associée aux données de scène, depuis un point de vue correspondant à une pose recherchée,
- un détecteur agencé pour recevoir des données de prise de vue et pour retourner un ou plusieurs doublets d'objet bidimensionnel comprenant chacune un identifiant d'objet présent dans les données de scène, et une zone de prise de vue associée à cet identifiant d'objet,
- un préparateur agencé pour déterminer, pour certains au moins des doublets d'objet bidimensionnel issu du détecteur, un jeu d'éléments de positionnement dont le nombre est inférieur ou égal au nombre de doublets d'objet tridimensionnel dans les données de scène qui comprennent l'identifiant d'objet du doublet d'objet bidimensionnel concerné, chaque élément de positionnement associant l'identifiant d'objet et les données d'ellipsoïde d'un doublet d'objet tridimensionnel comprenant cet identifiant d'objet, et des données d'ellipse qui définissent une ellipse approximant la zone de prise de vue du doublet d'objet bidimensionnel concerné et son orientation ainsi qu'une position de son centre dans l'image en deux dimensions,
- un combinateur agencé pour générer une liste de candidats associant chacun un ou plusieurs éléments de positionnement et une orientation de prise de vue, ou la combinaison d'au moins deux éléments de positionnement, les éléments de positionnement d'un même candidat étant tirés de doublets d'objet bidimensionnel distincts et ne concernant pas un même doublet d'objet tridimensionnel,
- un estimateur agencé pour calculer pour au moins un des candidats une pose comprenant une position et une orientation dans le repère commun à partir des données d'ellipse et des données d'ellipsoïde des éléments de positionnement, ou à partir des données d'ellipse et des données d'ellipsoïde du ou des éléments de positionnement et de l'orientation de prise de vue,
- un électeur agencé pour, pour certaines au moins des poses, projeter toutes les données d'ellipsoïdes des données de scène sur les données de prise de vue à partir de la pose, déterminer une mesure de similarité entre chaque projection des données d'ellipsoïde et chaque ellipse définie par un doublet d'objet bidimensionnel issu du détecteur, et calculer une valeur de vraisemblance en utilisant pour chaque projection des données d'ellipsoïde la mesure de similarité la plus importante déterminée, et pour choisir la pose dont la valeur de vraisemblance est maximale.

Ce dispositif est très avantageux de par sa capacité à déterminer une position et une orientation, ou pose, sans capteur supplémentaire ni système de localisation externe comme un système de localisation par satellite. Cette indépendance du dispositif présente plusieurs avantages. Tout d'abord, la localisation peut être réalisée dans des espaces confinés, où il est difficile voire impossible de capter des signaux d'un système de localisation externe. En outre, le dispositif de localisation peut être mis en oeuvre avec du matériel relativement peu coûteux.

L'invention concerne également un procédé de traitement de prise de vue, sur la base

- de données de scène qui comprennent des doublets d'objet tridimensionnel associant chacun un identifiant d objet présent dans la scène, et des données d'ellipsoïde définissant un ellipsoïde ainsi que son orientation et une position de son centre dans un repère commun, et

- de données de prise de vue définissant une image en deux dimensions de la scène associée aux données de scène, depuis un point de vue correspondant à une pose recherchée.

Le procédé comprend les opérations suivantes :

a) détecter, à partir des données de prise de vue, un ou plusieurs doublets d'objet bidimensionnel comprenant chacune un identifiant d'objet présent dans les données de scène, et une zone de prise de vue associée à cet identifiant d'objet,

b) déterminer, pour au moins un des doublets d'objet bidimensionnel détectés, un jeu d'éléments de positionnement dont le nombre est inférieur ou égal au nombre de doublets d'objet tridimensionnel dans les données de scène qui comprennent l'identifiant d'objet du doublet d'objet bidimensionnel concerné, chaque élément de positionnement associant l'identifiant d'objet et les données d'ellipsoïde d'un doublet d'objet tridimensionnel comprenant cet identifiant d'objet, et des données d'ellipse qui définissent une ellipse approximant la zone de prise de vue du doublet d'objet bidimensionnel concerné et son orientation ainsi qu'une position de son centre dans l'image en deux dimensions,

c) générer une liste de candidats associant chacun un ou plusieurs éléments de positionnement et une orientation de prise de vue, ou la combinaison d'au moins deux éléments de positionnement, les éléments de positionnement d'un même candidat étant tirés de deux doublets d'objet bidimensionnel distincts et ne concernant pas un même doublet d'objet tridimensionnel,

d) calculer pour au moins un des candidats une pose comprenant une position et une orientation dans le repère commun à partir des données d'ellipse et des données d'ellipsoïde des éléments de positionnement, ou à partir des données d'ellipse et des données d'ellipsoïde du ou des éléments de positionnement et de l'orientation de prise de vue,

e) projeter, pour certaines au moins des poses, toutes les données d'ellipsoïdes des données de scène sur les données de prise de vue à partir de la pose, déterminer une mesure de similarité entre chaque projection des données d'ellipsoïde et chaque ellipse définie par un doublet d'objet bidimensionnel détecté, et calculer une valeur de vraisemblance en utilisant pour chaque projection des données d'ellipsoïde la mesure de similarité la plus importante déterminée, et

f) choisir la pose dont la valeur de vraisemblance est maximale.

Dans diverses variantes, le dispositif selon l'invention peut présenter une ou plusieurs des caractéristiques suivantes :

- l'électeur est agencé pour mettre en oeuvre une mesure de vraisemblance basée, pour une pose donnée, sur le nombre de mesures de similarité excédant un seuil donné,
- le préparateur détermine les données d'ellipse de chaque élément de positionnement avec une méthode des moindres carrés,
- le détecteur détermine une boîte rectangulaire comme zone de prise de vue de chaque doublet bidimensionnel à retourner, et le préparateur détermine les données d'ellipse de chaque élément de positionnement sur la base de l'ellipse inscrite dans la boîte rectangulaire formant la zone de prise de vue,
- le combinateur est agencé pour déterminer l'orientation de prise de vue en fonction de la détection de points de fuite au sein de l'image en deux dimensions de la scène associée aux données de scène,
- le combinateur est agencé pour déterminer l'orientation de prise de vue à l'aide d'un capteur, et
- le dispositif comprend en outre un dispositif de prise de vue agencé pour capturer une prise de vue de la scène depuis un point de vue donné pour en tirer les données de prise de vue.

D'autres caractéristiques et avantages de l'invention seront exposés en détail dans la description ci-après, faite en référence au dessin annexé, sur lequel :

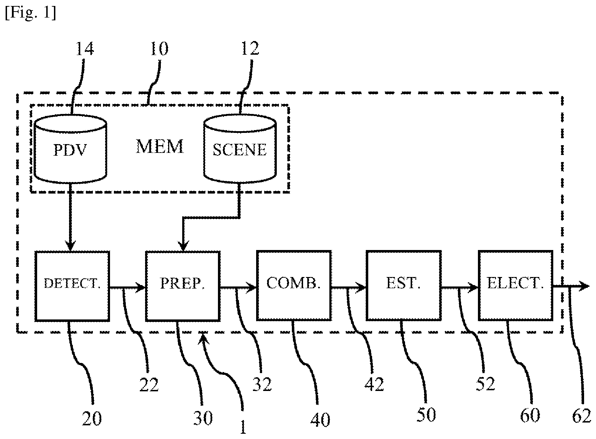

- [Fig. 1] représente une vue schématique du dispositif de localisation selon l'invention.

Les dessins annexés contiennent, pour l'essentiel, des éléments de caractère certain. Ils pourront donc non seulement servir à mieux faire comprendre la présente invention, mais aussi contribuer à sa définition, le cas échéant.

Il est fait référence à la figure 1.

Un dispositif de localisation 1 selon l'invention comprend une mémoire 10, un détecteur 20, un préparateur 30, un combinateur 40, un estimateur 50 et un électeur 60.

Dans l'exemple décrit ici, le dispositif de détermination de pose 1 est mis en oeuvre sur un ordinateur qui reçoit des données dans la mémoire 10 pour déterminer une pose au sein d'une scène connue. Le terme ordinateur doit être interprété au sens large du terme. Par exemple, il pourrait être une tablette ou un smartphone, un terminal d'interaction avec un serveur de calcul, ou un élément sur une grille de ressources distribuées, etc.

Le détecteur 20, le préparateur 30, le combinateur 40, l'estimateur 50, et l'électeur 60 sont ici des programmes exécutés par le processeur de l'ordinateur. En variante, un ou plusieurs de ces éléments pourrait être mis en oeuvre de manière différente au moyen d'un processeur dédié. Par processeur, il doit être compris tout processeur adapté aux traitements de données décrits plus bas. Un tel processeur peut être réalisé de toute manière connue, sous la forme d'un microprocesseur pour ordinateur personnel, d'une puce dédiée de type FPGA ou SoC (« system on chip » en anglais), d'une ressource de calcul sur une grille, d'un microcontrôleur, ou de toute autre forme propre à fournir la puissance de calcul nécessaire à la réalisation décrite plus bas. Un ou plusieurs de ces éléments peuvent également être réalisés sous la forme de circuits électroniques spécialisés tel un ASIC. Une combinaison de processeurs et de circuits électroniques peut également être envisagée.

La mémoire 10 peut être tout type de stockage de données propre à recevoir des données numériques : disque dur, disque dur à mémoire flash (SSD en anglais), mémoire flash sous toute forme, mémoire vive, disque magnétique, stockage distribué localement ou dans le cloud, etc. Les données calculées par le dispositif 1 peuvent être stockées sur tout type de mémoire similaire à la mémoire 10, ou sur celle-ci. Ces données peuvent être effacées après que le dispositif ait effectué ses tâches ou conservées.

La mémoire 10 reçoit des données de scène 12 et des données de prise de vue 14. Dans l'exemple décrit ici, la mémoire 10 peut également recevoir des données d'orientation qui définissent, pour des données de prises de vues 14 données, l'orientation de la prise de vue à partir de laquelle ces données ont été obtenues. Les données de scène 12 forment un modèle de scène décrivant une scène réelle dans laquelle on souhaite se repérer. Ces données de scène sont ici construites au préalable à l'aide d'un dispositif de construction de scène réalisant une procédure de construction de scène, comme on le verra plus loin. Ces données de scène sont préchargées dans la mémoire 10 du dispositif de localisation 1 lors d'une étape d'initialisation. Les données de prise de vue 14 comprennent une prise de vue qui se présente ici sous la forme d'une image en deux dimensions prise depuis un point de vue donné.

À partir de ces données de scène 12 et de ces données de prise de vue 14, le dispositif de localisation 1 détermine une pose, c'est-à-dire le couple formé par l'orientation et la position du point de vue à partir duquel ont été acquises les données de prise de vue 14. Dans un cas où la pose de ce point de vue est directement liée à la pose du dispositif de localisation, il est ainsi possible de déterminer la pose du dispositif à partir d'une simple prise de vue et des données de scène. La pose dans cette scène réelle est tridimensionnelle, et s'exprime dans un repère orthogonal appelé ici repère commun R0. Dans l'exemple décrit ici, une pose comprend donc deux vecteurs à trois dimensions, le premier vecteur étant un vecteur de position et le deuxième vecteur un vecteur d'orientation.

Les données de scène 12 comprennent une liste de doublets d'objet tridimensionnels, chaque doublet d'objet tridimensionnel comprenant des données permettant de modéliser en trois dimensions un objet de cette scène. Dans l'exemple décrit ici, chaque doublet d'objet tridimensionnel comprend un identifiant d'objet et des données d'ellipsoïde.

L'identifiant d'objet du doublet d'objet tridimensionnel désigne un objet présent dans la scène. Dans un mode de réalisation, l'identifiant d'objet est un identifiant d'une classe d'objet correspondant à un type d'objet présent dans la scène. L'usage de classes d'objet permet d'associer à plusieurs doublets d'objet un même identifiant d'objet, dans le cas où un même type d'objet est présent en plusieurs exemplaires dans la scène. En variante, cet identifiant d'objet peut être un identifiant unique associé à un objet unique présent dans la scène.

Les données d'ellipsoïde définissent un ellipsoïde, c'est-à-dire la forme, l'orientation et la position d'un ellipsoïde dans le repère commun. Cet ellipsoïde est une approximation de la forme générale de l'objet du doublet d'objet tridimensionnel déterminée pendant la procédure de construction de scène.

Dans l'exemple décrit ici, ces données d'ellipsoïde comprennent une matrice d'ellipsoïde E 3x3 symétrique réelle définie positive et une position P du centre de l'ellipsoïde exprimés dans le repère commun R0. Du fait de sa forme, la matrice E est diagonalisable et présente un repère propre RE dans lequel elle est diagonale avec trois coefficients AE, BE et CE positifs. Les coefficients AE, BE et CE définissent les trois demi-axes de l'ellipsoïde. Le repère propre RE de l'ellipsoïde définit une orientation de l'ellipsoïde dans le repère commun R0.

Il a été décrit ici que les données de scène comprennent un doublet d'objet tridimensionnel par objet présent dans la scène, y compris dans le cas où plusieurs objets du même type et de mêmes dimensions sont présents dans une scène. En variante, il est possible de mutualiser l'identifiant d'objet et les données d'ellipsoïde pour des objets de même type, et de considérer comme élément différentiant entre deux objets leurs positions respectives au sein de la scène. Cela peut se faire lorsqu'une classe d'objet porte sur des objets de même type, de mêmes dimensions et dont les ellipsoïdes respectifs sont orientés sensiblement de la même manière.

Les données de prise de vue 14 sont liées à une prise de vue dans la scène dans laquelle on cherche à se repérer, depuis un point de vue donné que l'on cherche à déterminer à l'aide du dispositif de localisation 1. Les données de prise de vue 14 comprennent une image en deux dimensions, appelée également prise de vue. Dans le mode de réalisation décrit ici, cette image en deux dimensions est de type matriciel (ou « bitmap » en anglais). L'image en deux dimensions peut être stockée dans la mémoire sous la forme d'un fichier compressé avec pertes, compressé sans pertes ou non compressé, et au format BMP, GIF, TIFF, PNG, JPEG, PPM, ou tout autre format adapté à l'encodage d'images matricielles, y compris des formats de type RAW issus d'un dispositif de prise de vue de type appareil photographique ou caméra. L'image en deux dimensions est ici en couleur. En variante, l'image en deux dimensions pourrait être en niveaux de gris.

Comme dans tout problème de positionnement, les paramètres intrinsèques de la caméra doivent être connus soit par un processus classique de calibrage, soit en utilisant les paramètres disponibles dans le champ EXIF (« Exchangeable image file format ») des images. Ces paramètres permettent de déduire la ligne de vue correspondant à un pixel dans le repère caméra et sont intégrés aux données de prise de vue 14.

Le détecteur 20 reçoit les données de prise de vue 14 stockées dans la mémoire 10, notamment une prise de vue. Le détecteur 20 reconnait au sein de la prise de vue un ou plusieurs objets qui y sont présents. Cette identification d'objets se fait ici grâce à un réseau neuronal, en particulier un réseau neuronal convolutif, ou CNN (« Convolutional neural network » en anglais). Le réseau neuronal convolutif est entraîné pour identifier parmi une liste d'objets possible des objets présents sur la prise de vue. Chaque objet de cette liste d'objets possibles correspond à l'un des identifiants d'objets des données de scène 12. En variante, le détecteur 20 pourrait être interactif. Par exemple, l'utilisateur pourrait détourer un objet d'intérêt, puis le détecteur 20 procéderait à partir de ce détourage et/ou d'interactions supplémentaires. Ce détourage pourrait prendre la forme d'une ellipse, d'un rectangle, d'un patatoïde ou d'une autre forme délimitant une zone fermée.

Durant l'identification des objets présents sur la prise de vue, le détecteur 20 délimite également une zone de prise de vue sur la prise de vue, qui correspond sensiblement à la zone de l'image en deux dimensions dans laquelle se situe l'objet. Cette zone de prise de vue peut être une boîte rectangulaire, une liste de pixels, un patatoïde ou toute autre forme délimitant une zone fermée de l'image en deux dimensions. Un exemple de CNN adapté pour remplir le rôle du détecteur est décrit dans l'article J. Redmon, S. K. Divvala, R. B. Girshick, and A. Farhadi : "You only look once: Unified, real-time object détection", in CVPR, 2016.

Le détecteur 20 associe à chaque objet identifié la zone de prise de vue délimitée, et renvoie un doublet d'objet bidimensionnel 22 comprenant l'identifiant d'objet et la zone de prise de vue.

Le préparateur 30 reçoit les doublets d'objet bidimensionnel 22 renvoyés par le détecteur. Pour chaque doublet d'objet bidimensionnel 22 reçu, le préparateur 30 détermine en fonction de la zone de prise de vue des données d'ellipse définissant une ellipse approximant la zone de prise de vue du doublet d'objet bidimensionnel 22 et une position p localisant cette ellipse sur la prise de vue.

Dans l'exemple décrit ici, ces données d'ellipse se présentent sous la forme d'une matrice d'ellipse e 2x2 symétrique réelle définie positive exprimée dans le repère de la prise de vue R1 et d'un vecteur bidimensionnel p comme position de l'ellipse dans l'image en deux dimensions. Du fait de sa forme, la matrice e est diagonalisable et présente un repère propre Re dans lequel elle est diagonale avec deux coefficients ae et be strictement positifs. Les coefficients ae et be définissent les deux demi-axes de l'ellipse. Le repère propre Re de l'ellipse définit une orientation de l'ellipse dans le repère de prise de vue R1. La détermination de cette matrice d'ellipse e peut se faire au moyen d'une approximation par moindres carrés de la zone de prise de vue.

En variante, par exemple lorsque la zone de prise de vue est une boîte rectangulaire, les données d'ellipse peuvent être issues de l'ellipse inscrite dans la boîte rectangulaire formant la zone de prise de vue.

Le préparateur 30 génère pour chaque doublet d'objet bidimensionnel 22 reçu un jeu d'éléments de positionnement. Ce jeu d'éléments de positionnement comporte autant d'éléments que de doublets d'objet tridimensionnels des données de scène 12 dont l'identifiant d'objet est l'identifiant d'objet du doublet d'objet bidimensionnel 22. Chaque élément de positionnement associe le doublet d'objet tridimensionnel des données de scène 12 correspondant et des données d'ellipse déterminées au préalable.

Les données d'ellipsoïde et les données d'ellipse d'un élément de positionnement forment une correspondance ellipse-ellipsoïde. La correspondance ellipse-ellipsoïde est essentielle pour déterminer une pose de la prise de vue.

En sortie, le préparateur 30 renvoie les jeux d'éléments de positionnement 32, certains éléments pouvant être erronés en raison d'erreurs du détecteur 20 ou de la présence de la possible répétition d'un même objet dans 1a scène.

Chaque élément correct permet de calculer de manière unique la pose si l'orientation est connue ainsi qu'une trajectoire paramétrique des solutions possibles si l'orientation est inconnue. Si l'orientation est inconnue, la pose peut être calculée par intersection d'ensembles à partir d'au moins deux éléments.

Le combinateur 40 reçoit les jeux d'éléments de positionnement 32 renvoyés par le préparateur 30. Le combinateur 40 génère une liste de candidats 42 à partir de ces jeux d'éléments de positionnement 32. Chaque candidat 42 associe :

- un ou plusieurs éléments de positionnement et une orientation dans le repère commun, ou
- au moins deux éléments de positionnement qui ne sont pas issus d'un même doublet bidimensionnel 22.

La Demanderesse a utilisé le fait que la projection conique d'un ellipsoïde sur un plan délimitait toujours un domaine du plan en forme d'ellipse. Ainsi, pour un modèle de scène inclus dans les données de scène 12 qui comprend des objets approximés par des ellipsoïdes, une prise de vue depuis un point de vue (c'est-à-dire une projection conique de la scène sur un plan définissant une image en deux dimensions) est une image en deux dimensions comprenant une pluralité d'ellipses, chaque ellipse correspondant à un ellipsoïde visible sur la prise de vue.

La Demanderesse a remarqué qu'il est possible, connaissant deux correspondances ellipse-ellipsoïde de déterminer de manière univoque la position et l'orientation du point de vue d'une prise de vue. La Demanderesse a également remarqué qu'une seule correspondance ellipse-ellipsoïde donne un ou plusieurs ensembles continus de poses pouvant correspondre à point de vue. Ainsi, une seule correspondance ellipse-ellipsoïde est insuffisante pour déterminer une pose de manière univoque. Cependant, si l'on connait l'orientation de la pose, il est possible de déterminer de manière univoque la position qui lui est associée, et donc la pose.

Comme décrit plus haut, les données d'orientation définissant l'orientation de la pose sont reçues dans la mémoire 10 comme données d'entrée. Ces données peuvent par exemple être reçues d'un capteur d'orientation que comprend le dispositif 1, ou auquel il est connecté.

En variante, ces données pourraient être déterminées à partir de points de fuite détectées au sein de l'image en deux dimensions de la scène associée aux données de scène. Dans un premier exemple, la méthode utilisée pour déterminer l'orientation de prise de vue dans le repère commun de la scène est une méthode d'analyse statistique tirée de l'article G. Simon, A. Fond, and M.-O. Berger. "A-Contrario Horizon-First Vanishing Point Détection Using Second-Order Grouping Laws". In ECCV, 2018.

D'autres exemples de détermination d'orientation sont décrits dans les articles :

- G. Simon, A. Fond, and M.-O. Berger "A Simple and Effective Method to Detect Orthogonal Vanishing Points in Uncalibrated Images of Man-Made Environments. ". In Eurographics, 2016.
- M. Zhai, S. Workman, and N. Jacobs. "Detecting vanishing points using global image context in a non-manhattan world". In CVPR, 2016. Cette méthode en particulier requiert l'utilisation d'un réseau neuronal convolutif, et dépend des données d'entraînement.

Il convient de noter que, dans certaines scènes, il n'est pas possible de détecter des points de fuite pour déterminer une orientation de prise de vue.

Certaines scènes, enfin, contiennent suffisamment d'objets pour qu'il soit quasiment toujours possible d'en détecter au moins deux sur la prise de vue. Pour ces scènes, il est donc sensiblement toujours possible de déterminer deux correspondances ellipse-ellipsoïde.

L'estimateur 50 reçoit les candidats 42 générés par le combinateur 40. L'estimateur est configuré pour calculer, pour chaque candidat 42, une pose 52 dans le repère commun R0.

Dans le cas où le candidat 42 comprend une unique correspondance ellipse-ellipsoïde (c'est-à-dire un élément de positionnement) et une orientation, il est possible de déterminer la position du point de vue associée en résolvant l'équation matricielle (11) de l'annexe A. La solution de l'équation (11) de l'annexe A est une position de l'ellipsoïde dans le repère R1 de la prise de vue. Connaissant la position de l'ellipsoïde dans le repère commun R0 de la scène (incluse dans les données de scène 12) et ayant déterminé la position de l'ellipsoïde dans le repère R1 de la prise de vue, on peut donc déterminer la position du repère R1 dans le repère R0 par simple multiplication matricielle.

Dans le cas où le candidat 42 comprend un nombre n supérieur ou égal à deux correspondances ellipse-ellipsoïde (c'est-à-dire deux éléments de positionnement) et en l'absence de connaissance sur l'orientation, il est possible de déterminer l'orientation et la position du point de vue. Pour ce faire, l'estimateur résout n équations où chaque équation est l'équation (11) avec comme paramètres d'entrée une des correspondances ellipse-ellipsoïde, et où ces n équations donnent n ensembles de poses solutions dans le repère de prise de vue R0. Cette résolution peut être exacte ou approximative, selon la quantité de bruit induit par l'identification réalisée par le détecteur 20.

L'estimateur 50 détermine ensuite la pose comme intersection de ces n ensembles de poses solutions exprimés dans le repère R0. Par exemple, afin de calculer cette intersection, lorsqu'un candidat contient trois correspondances ellipse-ellipsoïde ou plus, l'estimateur 50 calcule dans un premier temps l'orientation de la pose à calculer comme étant l'orientation minimisant une fonction de coût. Pour calculer cette orientation de la pose à calculer, l'estimateur utilise un algorithme de minimisation et une orientation initiale. L'orientation initiale peut être par exemple obtenue en analysant des points de fuite comme vu ci-dessus, ou par un capteur. En variante, l'orientation initiale peut être arbitrairement choisie a priori. Dans l'exemple décrit ici, l'algorithme de minimisation est un algorithme Levenberg-Marquardt et la fonction de coût est décrite par l'équation (13) de l'annexe A.

L'orientation ainsi calculée par minimisation est l'orientation de la pose à calculer. L'estimateur 50 calcule, pour chaque correspondance ellipse-ellipsoïde, une position respective sur la base du calcul décrit ci-dessus et de l'orientation de la pose qui vient d'être calculée. L'estimateur 50 calcule ensuite la position de la pose à calculer en faisant une moyenne pondérée des positions respectives calculées. La pondération peut se faire par un critère arbitraire, de manière uniforme ou de manière aléatoire.

Ainsi, pour chaque candidat 42 généré par le combinateur 40, le calculateur 50 calcule une pose 52 correspondante.

Dans le cas où le détecteur 20 ne détecte qu'un seul objet dans l'image en deux dimensions des données de prise de vue 14, une détermination d'orientation est réalisée par le combinateur 40, comme décrit plus haut. Avec l'objet détecté dans l'image en deux dimensions et l'orientation, le calculateur 50 détermine une seule pose qui correspond à la localisation pour les données de prise de vue.

Dans le cas où le détecteur 20 détecte au moins deux objets dans l'image en deux dimensions, plusieurs candidats 42 sont générés par le combinateur 40, et plusieurs poses 52 correspondantes sont calculées par le calculateur 50. Il faut alors déterminer la meilleure pose à retourner comme localisation pour les données de prise de vue.

L'électeur 60 va alors déterminer, parmi toutes ces poses 52 calculées, laquelle est la plus vraisemblable. Pour ce faire, pour chaque pose 52, l'électeur 60 projette toutes les données d'ellipsoïde des données de scène sur les données de prise de vue à partir de cette pose 52. De cette projection résulte une pluralité de données d'ellipse projetée. L'électeur 60 détermine ensuite une mesure de similarité entre chaque donnée ellipse projetée et chaque donnée d'ellipse définie par un doublet d'objet bidimensionnel issu du détecteur 20. L'électeur 60 détermine ensuite une valeur de vraisemblance de la pose 52 en utilisant la similarité entre ellipsoïdes projetés et ellipses détectées.

Dans le mode de réalisation décrit ici, cette mesure de similarité est un score désigné par l'acronyme IoU (« intersection over union » en anglais), également connu sous le nom d'indice de Jaccard En variante, d'autres mesures de similarité peuvent être utilisées : mesure de superposition (par exemple l'indice de Dice) ou distances ensemblistes (par exemple la distance de Hausdorff).

L'estimateur 60 retourne comme localisation 62 pour les données de prise de vue 14 la pose 52 dont la valeur de vraisemblance est maximale.

Dans l'exemple décrit ici, la valeur de vraisemblance pour une pose donnée est le nombre de valeurs d'intersection excédant un seuil donné. Ici, ce seuil est fixé à 0,5 pour un score IoU. Lorsque deux poses ou plus présentent le même nombre de valeurs excédant le seuil donné, c'est la somme des valeurs d'intersection de chaque pose qui est choisi pour déterminer la pose la plus vraisemblable.

Dans ce qui précède, il a été décrit un exemple dans lequel l'image en deux dimensions est matricielle et en couleur. En variante, l'image peut être vectorielle, et le choix de réseau neuronal convolutif est adapté de sorte à convenir à des images vectorielles. En variante toujours, l'image peut être monochrome, et là encore le choix d'un réseau neuronal convolutif doit être adapté en conséquence.

Il a également été décrit pour le préparateur 30 la détermination de tous les éléments de positionnement pouvant correspondre au niveau de l'identifiant d'objet à un doublet bidimensionnel donné. En variante, il est possible de ne déterminer qu'une partie de ces éléments de positionnement possibles. On peut par exemple déterminer un nombre N d'éléments de positionnement choisi, inférieur au nombre d'éléments de positionnement possibles. Ces N éléments de positionnement peuvent être choisis de manière aléatoire, ou selon un critère particulier contenu dans les données de scène 12 et/ou déterminé à partir des données de prise de vue, par exemple en fonction d'heuristiques ou de connaissances a priori sur la scène. Cela permet avantageusement de limiter l'augmentation du nombre d'éléments de positionnement à déterminer lorsque la scène à analyser contient beaucoup d'éléments. Il est ainsi possible de limiter la complexité de la localisation.

On a vu que le dispositif traitait les données tridimensionnels sous la forme de vecteurs et de matrices en trois dimensions. En variante, il est possible d'utiliser d'autres représentations, par exemple avec des quaternions (rotations à 4 éléments), ou tout autre formalisme mathématique adapté pour décrire des données tridimensionnelles. Les quaternions constituent une représentation particulièrement pour décrire une orientation, comme par exemple l'orientation du repère de prise de vue R1.

**Annexe A :**

Les formules ci-dessous expliquent comment une pose peut être déterminée à partir des éléments de positionnement.

Équation d'un ellipsoïde A de centre c. A est une matrice symétrique réelle définie positive 3x3 :

$$(1) \qquad (x\text{-}c)^{\mathrm{T}}A(x\text{-}c) = 1$$

Équation du cône B de centre E. B est une matrice symétrique réelle inversible de signature (1,2) :

$$(2) \qquad (x\text{-}e)^{\mathrm{T}}B(x\text{-}e) = 0$$

Équation de la matrice B du cône de projection de sommet e (origine du repère de prise de vue) tangent à un ellipsoïde de matrice A et de centre c, où d = e - c :

$$(3) \qquad B = Add^T A - (d^T Ad - 1)A$$

Équation de la matrice B' du cône de rétroprojection de sommet e tangent à une ellipse de centre k, de repère propre (u,v) et de demi-axes a, b :

$$(4) \qquad B' = P^T MP - Q$$

Où I est la matrice identité et P, M et Q vérifient :

$$(5) \qquad M = uu^T/a^2 + vv^T/b^2$$

$$(6) \qquad w = n/(n.(k - e))$$

$$(7) \qquad P = I - (k - e)w^T$$

$$(8) \qquad Q = ww^T$$

Où

- n vecteur de norme 1 tel que (u, v, n) base orthonormée de l'espace,
- a et b demi-axes associées à u et v (respectivement),
- k centre de l'ellipse

Équation de correspondance ellipse-ellipsoïde : deux cônes B, B' sont égaux si et seulement si (9), où s est un nombre réel non nul :

$$(9) \qquad B = s.B'$$

Connaissant un ellipsoïde et une ellipse (repère propre, matrice diagonale et centre), on peut construire leurs cônes de projection et de rétroprojection respectifs.

Si les cônes sont égaux (i.e. vérifient la formule (9)), alors la formule suivante est vérifiée :

$$(10) \qquad Ad = sB'd$$

Calculer la pose de l'ellipsoïde revient à déterminer le triplet (R, d, s) solution de l'équation (X) :

$$(11) \qquad DRdd^T R^T D - (d^T R^T DRd - 1)D = sRB'R^T$$

Où

- R est l'orientation de l'ellipsoïde, c'est-à-dire la matrice de passage du repère de prise de vue R1 au repère propre de l'ellipsoïde, d sa position et s un scalaire
- D est la matrice diagonale de l'ellipsoïde, telle que $A = R^T DR$, et
- s un scalaire (ou nombre réel) arbitraire

Exemple de fonction de coût à minimiser pour une correspondance ellipse-ellipsoïde i donnée :

$$(12) \quad F^{(i)}(R) = |\text{discriminant}(P\{A^{(i)}_1(R), B^{(i)}_1{}'\})|^2$$

Où

- R est l'orientation du repère caméra dans le repère commun,
- $A^{(i)}_1$ est la matrice de l'ellipsoïde i dans le repère R1,
- $B^{(i)}_1{}'$ est la matrice du cône de rétroprojection issu de l'ellipse i dans le repère R1,
- $P\{A,B'\}$ est le polynôme $\det(A - xB')$,
- $|.|$ la fonction valeur absolue,

pour la correspondance ellipse-ellipsoïde concernée.

Fonction de coût globale pour un ensemble de N correspondances ellipse/ellipsoïde données :

$$(13) \quad F(R) = \Sigma_{i=1..N} (F^{(i)}(R))$$

## Revendications

1. Dispositif de traitement de prise de vue, comprenant :

   - une mémoire (10) agencée pour recevoir d'une part des données de scène (12) qui comprennent des doublets d'objet tridimensionnel associant chacun un identifiant d'objet présent dans la scène, et des données d'ellipsoïde définissant un ellipsoïde ainsi que son orientation et une position de son centre dans un repère commun, et d'autre part des données de prise de vue (14) définissant une image en deux dimensions de la scène associée aux données de scène (12), depuis un point de vue correspondant à une pose recherchée,
   - un détecteur (20) agencé pour recevoir des données de prise de vue (14) et pour retourner un ou plusieurs doublets d'objet bidimensionnel (22) comprenant chacun un identifiant d'objet présent dans les données de scène, et une zone de prise de vue associée à cet identifiant d'objet,
   - un préparateur (30) agencé pour déterminer, pour certains au moins des doublets d'objet bidimensionnel (22) issu du détecteur (20), un jeu d'éléments de positionnement (32) dont le nombre est inférieur ou égal au nombre de doublets d'objet tridimensionnel dans les données de scène (12) qui comprennent l'identifiant d'objet du doublet d'objet bidimensionnel (22) concerné, chaque élément de positionnement (32) associant l'identifiant d'objet et les données d'ellipsoïde d'un doublet d'objet tridimensionnel comprenant cet identifiant d'objet, et des données d'ellipse qui définissent une ellipse approximant la zone de prise de vue du doublet d'objet bidimensionnel concerné et son orientation ainsi qu'une position de son centre dans l'image en deux dimensions,
   - un combinateur (40) agencé pour générer une liste de candidats (42) associant chacun un ou plusieurs éléments de positionnement (32) et une orientation de prise de vue ou la combinaison d'au moins deux éléments de positionnement (32), les éléments de positionnement (32) d'un même candidat (42) étant tirés de doublets d'objet bidimensionnel (22) distincts et ne concernant pas un même doublet d'objet tridimensionnel,
   - un estimateur (50) agencé pour calculer pour au moins un des candidats une pose (52) comprenant une position et une orientation dans le repère commun à partir des données d'ellipse et des données d'ellipsoïde des éléments de positionnement, ou à partir des données d'ellipse et des données d'ellipsoïde du ou des éléments de positionnement et de l'orientation de prise de vue,
   - un électeur (60) agencé pour, pour certaines au moins des poses, projeter toutes les données d'ellipsoïdes des données de scène sur les données de prise de vue à partir de la pose, déterminer une mesure de similarité entre chaque projection des données d'ellipsoïde et chaque ellipse définie par un doublet d'objet bidimensionnel (22) issu du détecteur (20), et calculer une valeur de vraisemblance en utilisant pour chaque projection des données d'ellipsoïde la mesure de similarité la plus importante déterminée, et pour choisir la pose dont la valeur de vraisemblance est maximale.

2. Dispositif de traitement de prise de vue selon la revendication 1, dans lequel l'électeur (60) est agencé pour mettre en oeuvre une mesure de vraisemblance basée, pour une pose (52) donnée, sur le nombre de mesures de similarité excédant un seuil donné.

3. Dispositif de traitement de prise de vue selon l'une des revendications précédentes, dans lequel le préparateur (30) détermine les données d'ellipse de chaque élément de positionnement (32) avec une méthode des moindres carrés.

**4.** Dispositif de traitement de prise de vue selon l'une des revendications 1 ou 2, dans lequel

- le détecteur (20) détermine une boîte rectangulaire comme zone de prise de vue de chaque doublet bidimensionnel (22) à retourner, et
- le préparateur (30) détermine les données d'ellipse de chaque élément de positionnement (32) sur la base de l'ellipse inscrite dans la boîte rectangulaire formant la zone de prise de vue.

**5.** Dispositif de traitement de prise de vue selon l'une des revendications précédentes, dans lequel le combinateur (40) est agencé pour déterminer l'orientation de prise de vue en fonction de la détection de points de fuite au sein de l'image en deux dimensions de la scène associée aux données de scène.

**6.** Dispositif de traitement de prise de vue selon l'une des revendications précédentes, dans lequel le combinateur (40) est agencé pour déterminer l'orientation de prise de vue à l'aide d'un capteur.

**7.** Dispositif de traitement de prise de vue selon l'une des revendications précédentes comprenant en outre un dispositif de prise de vue agencé pour capturer une prise de vue de la scène depuis un point de vue donné pour en tirer les données de prise de vue (14).

**8.** Procédé de traitement de prise de vue, sur la base

- de données de scène (12) qui comprennent des doublets d'objet tridimensionnel associant chacun un identifiant d'objet présent dans la scène, et des données d'ellipsoïde définissant un ellipsoïde ainsi que son orientation et une position de son centre dans un repère commun, et
- de données de prise de vue (14) définissant une image en deux dimensions de la scène associée aux données de scène (12), depuis un point de vue correspondant à une pose recherchée,

le procédé comprenant les opérations suivantes :

a) détecter, à partir des données de prise de vue (14), un ou plusieurs doublets d'objet bidimensionnel (22) comprenant chacun un identifiant d'objet présent dans les données de scène, et une zone de prise de vue associée à cet identifiant d'objet,
b) déterminer, pour au moins un des doublets d'objet bidimensionnel (22) détectés, un jeu d'éléments de positionnement (32) dont le nombre est inférieur ou égal au nombre de doublets d'objet tridimensionnel dans les données de scène (12) qui comprennent l'identifiant d'objet du doublet d'objet bidimensionnel (22) concerné, chaque élément de positionnement (32) associant l'identifiant d'objet et les données d'ellipsoïde d'un doublet d'objet tridimensionnel comprenant cet identifiant d'objet, et des données d'ellipse qui définissent une ellipse approximant la zone de prise de vue du doublet d'objet bidimensionnel concerné et son orientation ainsi qu'une position de son centre dans l'image en deux dimensions,
c) générer une liste de candidats (42) associant chacun un ou plusieurs éléments de positionnement (32) et une orientation de prise de vue ou la combinaison d'au moins deux éléments de positionnement (32), les éléments de positionnement (32) d'un même candidat (42) étant tirés de deux doublets d'objet bidimensionnel (22) distincts et ne concernant pas un même doublet d'objet tridimensionnel,
d) calculer pour au moins un des candidats une pose (52) comprenant une position et une orientation dans le repère commun à partir des données d'ellipse et des données d'ellipsoïde des éléments de positionnement, ou à partir des données d'ellipse et des données d'ellipsoïde du ou des éléments de positionnement et de l'orientation de prise de vue,
e) projeter, pour certaines au moins des poses, toutes les données d'ellipsoïdes des données de scène sur les données de prise de vue à partir de la pose, déterminer une mesure de similarité entre chaque projection des données d'ellipsoïde et chaque ellipse définie par un doublet d'objet bidimensionnel (22) détecté, et calculer une valeur de vraisemblance en utilisant pour chaque projection des données d'ellipsoïde la mesure de similarité la plus importante déterminée, et
f) choisir la pose dont la valeur de vraisemblance est maximale.

**Patentansprüche**

**1.** Vorrichtung zur Verarbeitung einer Bildaufnahme, die enthält:

- einen Speicher (10), der eingerichtet ist, um einerseits Szenedaten (12), die je eine in der Szene vorhandene Objektkennung assoziierende dreidimensionale Objekt-Dubletten und Ellipsoiddaten enthalten, die ein Ellipsoid sowie seine Ausrichtung und eine Position seiner Mitte in einem gemeinsamen Bezugssystem definieren, und andererseits Bildaufnahmedaten (14) zu empfangen, die ein zweidimensionales Bild der mit den Szenedaten (12) assoziierten Szene definieren, ausgehend von einem einer gesuchten Pose entsprechenden Blickpunkt,
- einen Detektor (20), der eingerichtet ist, um Bildaufnahmedaten (14) zu empfangen und um eine oder mehrere zweidimensionale Objekt-Dubletten (22), die je eine in den Szenedaten vorhandenen Objektkennung enthalten, und einen mit dieser Objektkennung assoziierten Bildaufnahmebereich zurückzuschicken,
- einen Präparator (30), der eingerichtet ist, um für mindestens bestimmte der vom Detektor (20) stammenden zweidimensionalen Objekt-Dubletten (22) einen Satz von Positionierungselementen (32) zu bestimmen, deren Anzahl geringer als die oder gleich der Anzahl von dreidimensionalen Objekt-Dubletten in den Szenedaten (12) ist, die die Objektkennung der betroffenen zweidimensionalen Objekt-Dublette (22) enthalten, wobei jedes Positionierungselement (32) die Objektkennung und die Ellipsoiddaten einer diese Objektkennung enthaltenden dreidimensionalen Objekt-Dublette und Ellipsendaten assoziiert, die eine den Bildaufnahmebereich der betroffenen zweidimensionalen Objekt-Dublette approximierende Ellipse und ihre Ausrichtung sowie eine Position ihrer Mitte im zweidimensionalen Bild definieren,
- einen Kombinator (40), der eingerichtet ist, um eine Liste von Kandidaten (42) zu generieren, die je ein oder mehrere Positionierungselemente (32) und eine Bildaufnahmeausrichtung oder die Kombination von mindestens zwei Positionierungselementen (32) assoziieren, wobei die Positionierungselemente (32) eines gleichen Kandidaten (42) aus verschiedenen zweidimensionalen Objekt-Dubletten (22) entnommen werden und keine gleiche dreidimensionale Objekt-Dublette betreffen,
- einen Schätzer (50), der eingerichtet ist, um für mindestens einen der Kandidaten eine Pose (52) zu berechnen, die eine Position und eine Ausrichtung im gemeinsamen Bezugssystem enthält, ausgehend von den Ellipsendaten und den Ellipsoiddaten der Positionierungselemente oder ausgehend von den Ellipsendaten und den Ellipsoiddaten des oder der Positionierungselemente und der Bildaufnahmeausrichtung,
- einen Wähler (60), der eingerichtet ist, um für mindestens bestimmte der Posen alle Ellipsoiddaten der Szenedaten auf die Bildaufnahmedaten ausgehend von der Pose zu projizieren, eine Ähnlichkeitsmessung zwischen jeder Projektion der Ellipsoiddaten und jeder von einer vom Detektor (20) stammenden zweidimensionalen Objekt-Dublette (22) definierten Ellipse zu bestimmen, und einen Wahrscheinlichkeitswert zu berechnen, unter Verwendung für jede Projektion der Ellipsoiddaten der bestimmten größten Ähnlichkeitsmessung, und um die Pose zu wählen, deren Wahrscheinlichkeitswert maximal ist.

2. Vorrichtung zur Verarbeitung einer Bildaufnahme nach Anspruch 1, wobei der Wähler (60) eingerichtet ist, um eine Wahrscheinlichkeitsmessung durchzuführen, die für eine gegebene Pose (52) auf der Anzahl von Ähnlichkeitsmessungen basiert, die eine gegebene Schwelle überschreiten.

3. Vorrichtung zur Verarbeitung einer Bildaufnahme nach einem der vorhergehenden Ansprüche, wobei der Präparator (30) die Ellipsendaten jedes Positionierungselements (32) mit einer Methode der kleinsten Quadrate bestimmt.

4. Vorrichtung zur Verarbeitung einer Bildaufnahme nach einem der Ansprüche 1 oder 2, wobei

- der Detektor (20) eine rechteckige Box als Bildaufnahmebereich jeder zurückzuschickenden zweidimensionalen Dublette (22) bestimmt, und
- der Präparator (30) die Ellipsendaten jedes Positionierungselements (32) auf der Basis der in die den Bildaufnahmebereich formende rechteckige Box eingeschriebenen Ellipse bestimmt.

5. Vorrichtung zur Verarbeitung einer Bildaufnahme nach einem der vorhergehenden Ansprüche, wobei der Kombinator (40) eingerichtet ist, um die Bildaufnahmeausrichtung abhängig von der Erkennung von Fluchtpunkten innerhalb des zweidimensionalen Bilds der mit den Szenedaten assoziierten Szene zu bestimmen.

6. Vorrichtung zur Verarbeitung einer Bildaufnahme nach einem der vorhergehenden Ansprüche, wobei der Kombinator (40) eingerichtet ist, um die Bildaufnahmeausrichtung mit Hilfe eines Sensors zu bestimmen.

7. Vorrichtung zur Verarbeitung einer Bildaufnahme nach einem der vorhergehenden Ansprüche, die außerdem eine Bildaufnahmevorrichtung enthält, die eingerichtet ist, um eine Bildaufnahme der Szene ausgehend von einem gegebenen Blickpunkt zu erfassen, um daraus die Bildaufnahmedaten (14) zu entnehmen.

8. Verfahren zur Verarbeitung einer Bildaufnahme auf der Basis von

- Szenedaten (12), die je eine in der Szene vorhandene Objektkennung assoziierende dreidimensionale Objekt-Dubletten und Ellipsoiddaten enthalten, die ein Ellipsoid sowie seine Ausrichtung und eine Position seiner Mitte in einem gemeinsamen Bezugssystem definieren, und

- Bildaufnahmedaten (14), die ein zweidimensionales Bild der mit den Szenedaten (12) assoziierten Szene definieren, ausgehend von einem einer gesuchten Pose entsprechenden Blickpunkt,

wobei das Verfahren die folgenden Vorgänge enthält:

a) Erkennen, ausgehend von den Bildaufnahmedaten (14), einer oder mehrerer zweidimensionaler Objekt-Dubletten (22), die je eine in den Szenedaten vorhandene Objektkennung und einen mit dieser Objektkennung assoziierten Bildaufnahmebereich enthalten,

b) Bestimmen, für mindestens eine der erkannten zweidimensionalen Objekt-Dubletten (22), eines Satzes von Positionierungselementen (32), deren Anzahl geringer als die oder gleich der Anzahl von dreidimensionalen Objekt-Dubletten in den Szenedaten (12) ist, die die Objektkennung der betroffenen zweidimensionalen Objekt-Dublette (22) enthalten, wobei jedes Positionierungselement (32) die Objektkennung und die Ellipsoiddaten einer diese Objektkennung enthaltenden dreidimensionalen Objekt-Dublette und Ellipsendaten assoziiert, die eine Ellipse, die den Bildaufnahmebereich der betroffenen zweidimensionalen Objekt-Dublette approximiert, und ihre Ausrichtung sowie eine Position ihrer Mitte in dem zweidimensionalen Bild definieren,

c) Generieren einer Liste von Kandidaten (42), die je ein oder mehrere Positionierungselemente (32) und eine Bildaufnahmeausrichtung oder die Kombination von mindestens zwei Positionierungselementen (32) assoziieren, wobei die Positionierungselemente (32) eines gleichen Kandidaten (42) aus zwei verschiedenen zweidimensionalen Objekt-Dubletten (22) entnommen werden und nicht eine gleiche dreidimensionale Objekt-Dublette betreffen,

d) Berechnen, für mindestens einen der Kandidaten, einer Pose (52), die eine Position und eine Ausrichtung im gemeinsamen Bezugssystem enthält, ausgehend von den Ellipsendaten und den Ellipsoiddaten der Positionierungselemente, oder ausgehend von den Ellipsendaten und den Ellipsoiddaten des oder der Positionierungselemente und der Bildaufnahmeausrichtung,

e) Projizieren, für mindestens bestimmte der Posen, aller Ellipsoiddaten der Szenedaten auf die Bildaufnahmedaten ausgehend von der Pose, Bestimmen einer Ähnlichkeitsmessung zwischen jeder Projektion der Ellipsoiddaten und jeder von einer erkannten zweidimensionalen Objekt-Dublette (22) definierten Ellipse, und Berechnen eines Wahrscheinlichkeitswerts unter Verwendung für jede Projektion der Ellipsoiddaten der bestimmten größten Ähnlichkeitsmessung, und

f) Wählen der Pose, deren Wahrscheinlichkeitswert maximal ist.

**Claims**

1. Shot-processing device, comprising:

- a memory (10) arranged to receive, on the one hand, scene data (12) that comprise three-dimensional object pairs each associating an object identifier, and ellipsoid data which define an ellipsoid and its orientation and a position of its center in a common frame of reference and, on the other hand, shot data (14) defining a two-dimensional image of the scene associated with the scene data (12), from a viewpoint corresponding to a desired pose,

- a detector (20) arranged to receive shot data (14) and to return one or more two-dimensional object pairs (22) each comprising an object identifier present in the scene data, and a shot region associated with this object identifier,

- a preparer (30) arranged to determine, for at least some of the two-dimensional object pairs (22) from the detector (20), a set of positioning elements (32), the number whereof is less than or equal to the number of three-dimensional object pairs in the scene data (12) that comprise the object identifier of the two-dimensional object pair (22) in question, each positioning element (32) associating the object identifier and the ellipsoid data of a three-dimensional object pair comprising this object identifier, and ellipse data which define an ellipse approximating the shot region of the two-dimensional object pair in question and its orientation as well as a position of its center in the two-dimensional image,

- a combiner (40) arranged to generate a list of candidates (42) each associating one or more positioning elements and a shot orientation (32) or the combination of at least two positioning elements (32), the positioning elements (32) of a candidate (42) being taken from separate two-dimensional object pairs (22) and not relating to the same three-dimensional object pair,

- an estimator (50) arranged to calculate, for at least one of the candidates, a pose (52) comprising a position and an orientation in the common frame of reference from the ellipse data and the ellipsoid data of the positioning elements, or from the ellipse data and the ellipsoid data of the one or more positioning elements and the shot orientation,

- a selector (60) arranged, for at least some of the poses, to project all of the ellipsoid data of the scene data onto the shot data from the pose, to determine a measurement of similarity between each projection of the ellipsoid data and each ellipse defined by a two-dimensional object pair (22) coming from the detector (20), and to calculate a likelihood value by using, for each projection of the ellipsoid data, the largest measurement of similarity determined, and to select the pose that has the highest likelihood value.

2. Shot-processing device according to claim 1, wherein the selector (60) is arranged to carry out a measurement of likelihood based, for a given pose (52), on the number of measurements of similarity that exceed a given threshold.

3. Shot-processing device according to any one of the preceding claims, wherein the preparer (30) determines the ellipse data of each positioning element (32) using a method of least squares.

4. Shot-processing device according to any of claim 1 or 2, wherein

   - the detector (20) determines a rectangular box as a shot region of each two-dimensional pair (22) to be returned, and
   - the preparer (30) determines the ellipse data of each positioning element (32) based on the ellipse inscribed in the rectangular box forming the shot region.

5. Shot-processing device according to any one of the preceding claims, wherein the combiner (40) is arranged to determine the shot orientation as a function of the detection of vanishing points within the two-dimensional image of the scene associated with the scene data.

6. Shot-processing device according to any one of the preceding claims, wherein the combiner (40) is arranged to determine the shot orientation by means of a sensor.

7. Shot-processing device according to any one of the preceding claims, further comprising a shot device arranged to capture a shot of the scene from a given viewpoint in order to derive the shot data (14) therefrom.

8. Shot-processing method based on:

   - scene data (12) that comprise three-dimensional object pairs each associating an object identifier present in the scene data, and ellipsoid data which define an ellipsoid and its orientation and a position of its center in a common frame of reference, and
   - shot data (14) defining a two-dimensional image of the scene associated with the scene data (12), from a viewpoint corresponding to a desired pose,

   the method comprising the following operations:

   a) detecting, from shot data (14), one or more two-dimensional object pairs (22) each comprising an object identifier present in the scene data, and a shot region associated with this object identifier,
   b) determining, for at least one of the two-dimensional object pairs (22) detected, a set of positioning elements (32), the number whereof is less than or equal to the number of three-dimensional object pairs in the scene data (12) that comprise the object identifier of the two-dimensional object pair (22) in question, each positioning element (32) associating the object identifier and the ellipsoid data of a three-dimensional object pair comprising this object identifier, and ellipse data which define an ellipse approximating the shot region of the two-dimensional object pair in question and its orientation as well as a position of its center in the two-dimensional image,
   c) generating a list of candidates (42) each associating one or more positioning elements (32) and a shot orientation or the combination of at least two positioning elements (32), the positioning elements (32) of a candidate (42) being taken from two separate two-dimensional object pairs (22) and not relating to the same three-dimensional object pair,
   d) calculating, for at least one of the candidates, a pose (52) comprising a position and an orientation in the common frame of reference from the ellipse data and the ellipsoid data of the positioning elements, or from the ellipse data and the ellipsoid data of the one or more positioning elements and the shot orientation,

e) projecting, for at least some of the poses, all of the ellipsoid data of the scene data onto the shot data from the pose, to determine a measurement of similarity between each projection of the ellipsoid data and each ellipse defined by a two-dimensional object pair (22) detected, and to calculate a likelihood value by using, for each projection of the ellipsoid data, the largest measurement of similarity determined, and

f) selecting the pose that has the highest likelihood value.

[Fig. 1]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 9002062 B2

**Littérature non-brevet citée dans la description**

- QuadricSLAM: Dual Quadrics From Object Détections as Landmarks in Object-Oriented SLAM. **NICHOLSON LACHLAN et al.** IEEE ROBOTICS AND AUTOMATION LETTERS. IEEE, 01 Janvier 2019, vol. 4, 1-8
- Probabilistic Structure from Motion with Objects (PS-fMO). **GAY PAUL et al.** IEEE INTERNATIONAL CONFERENCE ON COMPUTER VISION (ICCV). IEEE, 22 Octobre 2017, 3094-3103
- **MEHDI HOSSEINZADEH et al.** Structure Aware SLAM using Quadrics and Planes. CORNELL UNIVERSITY LIBRARY, 24 Avril 2018
- **J. REDMON ; S. K. DIVVALA ; R. B. GIRSHICK ; A. FARHADI.** You only look once: Unified, real-time object détection. *CVPR,* 2016
- **G. SIMON ; A. FOND ; M.-O. BERGER.** A-Contrario Horizon-First Vanishing Point Détection Using Second-Order Grouping Laws. *ECCV,* 2018
- **G. SIMON ; A. FOND ; M.-O. BERGER.** A Simple and Effective Method to Detect Orthogonal Vanishing Points in Uncalibrated Images of Man-Made Environments. *Eurographics,* 2016
- **M. ZHAI ; S. WORKMAN ; N. JACOBS.** Detecting vanishing points using global image context in a non-manhattan world. *CVPR,* 2016